Europäisches Patentamt

European Patent Office

Office européen des brevets

(11) Veröffentlichungsnummer : **0 037 361**
**B1**

(19)

(12) **EUROPÄISCHE PATENTSCHRIFT**

(45) Veröffentlichungstag der Patentschrift :
26.06.85

(51) Int. Cl.⁴ : **B 23 Q  7/14**

(21) Anmeldenummer : 81710005.0

(22) Anmeldetag : 19.02.81

(54) Werkstückträger für Fertigungs- und Montagestrassen.

(30) Priorität : 29.03.80 DE 3012274

(43) Veröffentlichungstag der Anmeldung :
07.10.81 Patentblatt 81/40

(45) Bekanntmachung des Hinweises auf die Patenterteilung : 26.06.85 Patentblatt 85/26

(84) Benannte Vertragsstaaten :
CH DE FR GB IT LI

(56) Entgegenhaltungen :
BE-A-  741 134
DE-C- 1 289 488
US-A- 4 148 400

(73) Patentinhaber : ROBERT BOSCH GMBH
Postfach 50
D-7000 Stuttgart 1 (DE)

(72) Erfinder : Drexel, Peter
Plieninger Strasse 33
D-7031 Steinenbronn (DE)
Erfinder : Leisner, Ernst, Dipl.-Ing.
Wettertalstrasse 4
D-7257 Ditzingen (DE)
Erfinder : Rothfuss, Peter
J.S.-Bach-Strasse 6/1
D-7257 Ditzingen (DE)
Erfinder : Jung, Rainer
Metzstrasse 1
D-7000 Stuttgart 1 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung geht aus von einem Werkstückträger nach der Gattung des Hauptanspruchs. Bei bekannten Werkstückträgern der gattungsmäßigen Art ist die Trägerplatte durch eine Stahlplatte gebildet, welche die tragende Funktion allein ausübt und deshalb verhältnismäßig dickwandig ausgeführt ist. An der Stahlplatte sind neben einem Werkstückaufnahmeteil sämtliche an einem Werkstückträger benötigten Zusatzeinrichtungen, wie Nocken für Vereinzeler, Justier- und Indexiereinrichtungen usw. befestigt bzw. vorgesehen. Diese Ausführung hat den Nachteil, daß der Werkstückträger verhältnismäßig schwer und unhandlich und seine Herstellung aufwendig und teuer ist.

Bei einer bekannten Ausführung einer Ladeplattform (DE-C-1 289 488) sind an den Rändern einer dickwandigen Grundplatte vier einzelne Schienen befestigt, welche mit Beschlägen zum Festzurren der Ladeplattform, beispielsweise in Transportfahrzeugen, versehen sind. Die einzelnen Schienen sind jedoch nicht miteinander verbunden, so daß sie an der Grundplatte nur einen unvollkommenen Versteifungseffekt hervorrufen können und die Grundplatte trotz Anordnung der Schienen eine genügend große Eigensteifigkeit haben muß.

### Vorteile der Erfindung

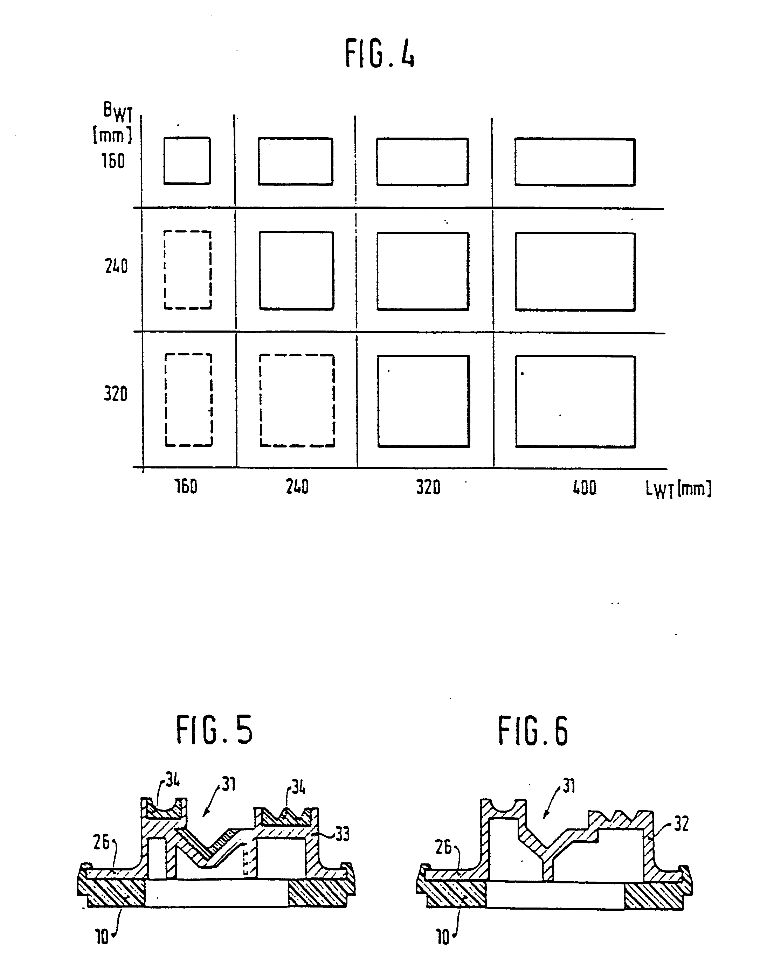

Die erfindungsgemäße Anordnung mit den kennzeichnenden Merkmalen des Hauptanspruchs, nämlich der aus zusammengesteckten Einzelteilen bestehende mehrteilige Aufbau des Werkstückträgers, hat demgegenüber den Vorteil, daß der Werkstückträger bei gleicher Verwindungssteifigkeit leichter und kostengünstiger, sowie im Baukastensystem herstellbar und je nach Einsatz leicht umrüstbar ist. So lassen sich z. B. mit nur wenigen verschiedenen Größen von Einzelelementen mehrere verschiedene Größen von Werkstückträgern herstellen (Figur 4). Der in bestimmten Größen zusammensteckbare Grundrahmen übt zusammen mit der Trägerplatte die Transport- und Trägerfunktion aus, wobei die Justier- und Fixiereinrichtungen, sowie Anschlagflächen für Vereinzelungsnocken wahlweise auch an den Einzelelementen des Grundrahmens vorgesehen sein können.

Durch die in den Unteransprüchen aufgeführten Maßnahmen sind vorteilhafte Weiterbildungen der im Hauptanspruch angegebenen Anordnung möglich.

Eine besonders verwindungssteife Ausführung ergibt sich, wenn die Einzelelemente des Grundrahmens mit Längsnuten versehen sind, in welche der ebene Rand der Trägerplatte passend eingreift.

Der Zusammenbau des Werkstückträgers wird erleichtert, wenn jedes Einzelelement an einem Ende einen Stirnzapfen und am anderen Ende eine Querbohrung hat, deren Abmessungen auf die Größe des Zapfens abgestimmt sind.

Zur Einsparung von zusätzlichen Mitteln zum Fixieren des Werkstückträgers am Arbeitsplatz bzw. an einer Bearbeitungsstation, wird gemäß der Erfindung weiter vorgeschlagen, daß die Trägerplatte mit dem Grundrahmen durch Buchsen verbunden ist, die passend durch Bohrungen in den Einzelelementen des Grundrahmens und in der Trägerplatte greifen und gleichzeitig Fixierelemente für den Werkstückträger bilden.

Die Einzelelemente des Grundrahmens können vorteilhaft aus gespritzten Kunststoff-Hohlprofilen aus Polyamid mit 30 % Glaskugelanteil bestehen. Durch die Hohlprofile wird eine leichte Bauweise bei hoher Stabilität erreicht. Die Einzelelemente können nach dem Prinzip von Nut und Feder miteinander verbunden werden, was bereits beim Spritzvorgang der Teile berücksichtigt werden kann. Der vorgeschlagene Kunststoff für die Einzelelemente ist zäh und abriebfest und beständig gegen Schmieröl, Fett, Benzin, Laugen und bedingt beständig gegen Säuren. Er kann bis zu Temperaturen von 120 °C verwendet werden.

Die erfindungsgemäße Ausbildung des Werkstückträgers hat den weiteren Vorteil, daß der Werkstückträger mit seinem Grundrahmen auf den Förderelementen der Fertigungs- bzw. Montagestraße aufliegt, beispielsweise auf umlaufenden Förderbändern aus Kunststoff. Durch die Abbildung des Grundrahmens aus Kunststoffprofilen ergeben sich günstige Gleiteigenschaften zwischen Werkstückträger und Förderelementen, wodurch diese weniger als bei der bekannten Ausführung beansprucht werden. Außerdem wird das Geräusch beim Aufprallen des Werkstückträgers auf einen Vereinzeler-Nocken oder einen benachbarten Werkstückträger durch die dämpfenden Eigenschaften des Kunststoffs wirksam vermindert.

Ein Ausführungsbeispiel der Erfindung ist in der Zeichnung dargestellt und in der nachfolgenden Beschreibung näher erläutert. Es zeigen Fig. 1 eine Ansicht von unten, Fig. 2 eine Seitenansicht, Fig. 3 eine Draufsicht des erfindungsgemäßen Werkstückträgers, Fig. 4 eine Übersicht über mögliche Baugrößen bei vier verschiedenen Längen der Einzelelemente, Fig. 5 und 6 Ausbildungen der Trägerplatte als Werkstückträger.

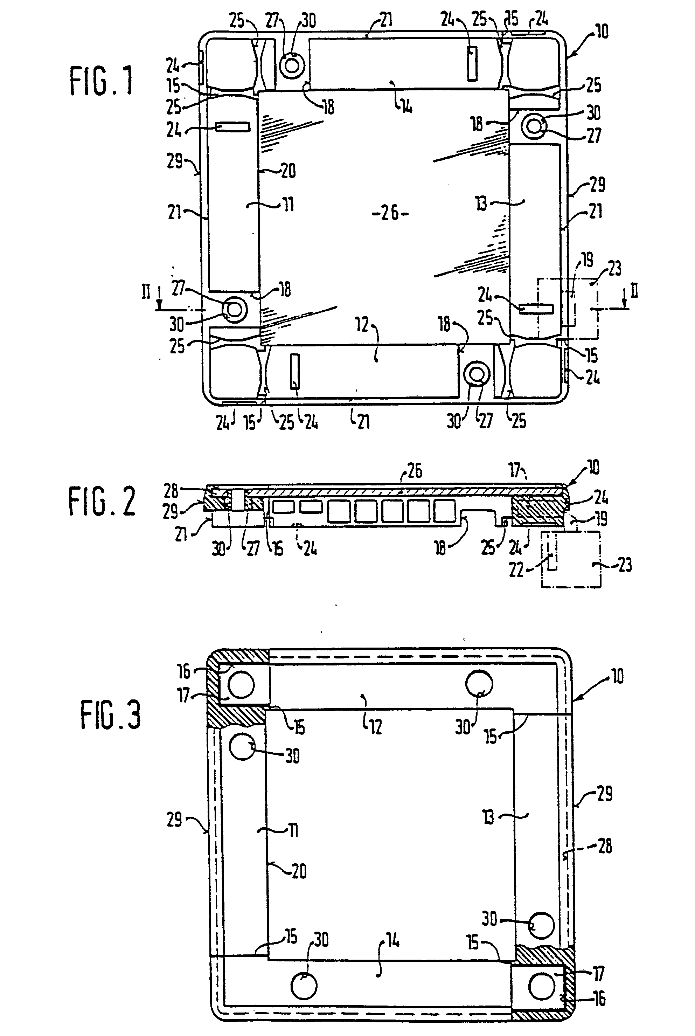

In den Fig. 1 bis 3 ist ein Werkstückträger abgebildet, wie er in der Fig. 4 links oben mit den Maßen 160 × 160 mm dargestellt ist. Der aus einem Kunststoffhohlprofil bestehende Grundrahmen 10 des Werkstückträgers besteht aus den vier Einzelteilen 11 bis 14, die an den Verbindungsstellen 15 aneinander liegen. Wie in Fig. 3 in einem Teilschnitt dargestellt, erfolgt die Verbindung z. B. der Einzelteile 11 und 12 oder 13 und 14 über eine Nut 16 im Einzelteil 11, 13 und ein entsprechend passendes Federteil 17 am Einzelteil 12, 14.

Wie aus Fig. 1 und 2 ersichtlich, weist jedes Einzelelement 11 bis 14 eine Aussparung 18 auf, durch die Vereinzelernocken 19 hindurchgreifen können. Der Werkstückträger kann von innen, z. B. an der Innenkante 20 oder außen, z. B. an der Außenkante 21 vom Vereinzelernocken 19 angehalten werden. Die Abfrage « Werkstückträger vorhanden » kann durch einen Nährungsschalter 22 erfolgen, der am Vereinzeler 23 an- oder eingebaut ist. Die Nährungsschalter 22 werden durch Metallplättchen 24, die als Bedämpfungsflächen dienen, betätigt. Hierdurch erübrigt sich das Ausrichten der Elemente. Falls der Einbau der Endschalter von unten aus Platzgründen nicht möglich ist, können die seitlichen Bedämpfungsflächen für die Abfrage benutzt werden. Hierdurch ergeben sich auch weitere Einsatzmöglichkeiten.

Der erfindungsgemäße Werkstückträger wird im Normalfall z. B. beim Transport mittels eines Doppelgurt-Bandes an der unteren Anschlagfläche 21 geführt. Hierfür können die Kunststoffprofile der nicht näher dargestellten Laufschienen des Doppelgurt-Bandes mit stabilen Seitenwangen versehen werden. Die Paarung Kunststoff-Werkstückträger-Rahmen und Kunststoff-Winkel der Laufschienen ergibt einen sehr geräuscharmen Lauf. Die Führungsgenauigkeit beträgt ± 2 mm.

Für erhöhte Anforderungen an die Führungsgenauigkeit kann der Werkstückträger auch innen geführt werden. Am Trägerprofil des Montagesystems wird hierfür ein Federstahlstreifen befestigt, der in die im Grundrahmen 10 vorhandenen X-förmigen Nuten 25 eingreift. Hierdurch wird die Führungsgenauigkeit auf ± 0,2 mm erhöht.

Auf den Werkstückträger-Grundrahmen 10, der aus den zusammengesteckten Einzelelementen 11 bis 14 besteht, wird die Trägerplatte 26 aufgelegt. Die etwa 5 mm starke Trägerplatte 26 wird mittels den Indexierbuchsen 27 und entsprechenden Bohrungen in der Trägerplatte und im Grundrahmen an letzterem befestigt. Die Indexierbuchsen 27 sind vorzugsweise konisch ausgebildet und können somit leicht wieder demontiert werden. Zusätzlich können die Elemente Aufnahmen für Einschlagmuttern enthalten, mit denen Rahmen und Trägerplatte nötigenfalls verschraubt werden. Dies ist jedoch nur bei höchsten Beanspruchungen oder sehr großen Werkstückträger-Abmessungen notwendig. Der Grundrahmen 10 enthält weiterhin in seinem oberen Bereich eine Nut 28 zur Aufnahme der Trägerplatte 26. Hierdurch wird eine genaue Fixierung der Trägerplatte 26 auf dem Grundrahmen 10 vorgenommen.

Durch seinen symmetrischen Aufbau kann der Werkstückträger in allen vier Richtungen transportiert werden. Dabei können sämtliche beschriebenen Funktionen durchgeführt werden.

Die Positionierung des Werkstückträgers mit dem Werkstück in der Arbeitsstellung an Handarbeitsplätzen oder Automatikstationen geschieht mittels der Vereinzeler 23 in Verbindung mit der Außenführung an der Anschlagsfläche 21 oder der Innenführung an den X-förmigen Nuten 25.

Reicht die Genauigkeit immer noch nicht aus, wird der Werkstückträger durch eine zusätzlich vorhandene Aushebeeinrichtung vom Band gehoben und mit Bolzen, die in die Indexierbuchsen 27 eingreifen, aufgenommen. Die Indexierbuchsen 27 haben demnach eine Doppelfunktion, nämlich Zusammenhalt des Werkstückträgers und genaue Positionierungsmöglichkeit. Durch diese zusätzliche Justiermöglichkeit wird eine Positionierungsgenauigkeit von 0,05 mm erreicht.

Die Werkstückträger untereinander berühren sich an der oberen äußeren Kante 29 des Grundrahmens 10. Das Geräusch beim Aufprall des Werkstückträgers auf den Vereinzelungsnocken 19 oder zweier Werkstückträger aufeinander wird durch die dämpfenden Eigenschaften des Kunststoffrahmens 10 sowie entsprechenden konstruktiven Ausbildungen vermindert. Hierzu tragen auch die Eigenschaften des nicht näher dargestellten Kunststoff-Führungwinkels am Band wirksam bei.

Die Einzelelemente des Grundrahmens 10 des Werkstückträgers sind aus Polyamid 12 mit 30 % Glaskugelanteil gespritzt. Dieser Werkstoff ist sehr zäh und abriebsfest bei geringer Feuchtigkeitsaufnahme. Er weist eine gute Beständigkeit gegen Schmieröl, Fett, Benzin, Testbenzin, Laugen und eine bedingt gute Beständigkeit gegen Säuren auf. Der Werkstoff ist bis zu einer Temperatur von 120 °C verwendbar.

Der erfindungsgemäße Werkstückträger kann je nach Größe der Einzelelemente 11 bis 14 in verschiedenen Größen im Baukastensystem hergestellt werden. Wie aus Fig. 4 ersichtlich, lassen sich z. B. mit vier Grundlängen (Länge und Breite in mm) neun verschiedene Größen von Werkstückträgern herstellen. Der Einsatz des Werkstückträgers ist deshalb als universell auzusehen.

Die Trägerplatte 26, die auf den Grundrahmen 10 befestigt wird, dient üblicherweise zur Werkstückaufnahme. Da der Grundrahmen 10 die Transport- und Trägerfunktion des Werkstückträgers ausübt, kann die Trägerplatte 26 wie in Fig. 5 und 6 dargestellt selbst als Werkstückaufnahme 31 ausgebildet sein. So kann die Trägerplatte 26 z. B. als Feingußteil 32 hergestellt werden oder als Gußteil 33 mit entsprechend angeformter Werkstückaufnahme, wobei weitere Kunststoffaufnahmen 34 für das Werkstück eingeschäumt sein können. Diese jeweilige Sonderausführung der Trägerplatte 26 wird auf den Grundrahmen 10 durch Einschieben in die Nut 28 fixiert und mittels den Indexierbuchsen 27 befestigt. Die Trägerplatte 26 muß demnach keine durchgehende Platte sein, sondern kann jegliche Art der Geometrie zur Aufnahme des Werkstücks annehmen. Eine derartige Ausbildung ist in Fig. 5 und 6 dargestellt.

## Patentansprüche

1. Werkstückträger für Fertigungs- bzw. Montagestraßen, mit einer Trägerplatte (26), die mit Mitteln (31) zur Aufnahme der Werkstücke versehen ist, dadurch gekennzeichnet, daß die Trägerplatte (26) in einem Grundrahmen (10) gefaßt ist, der aus standardisierten Einzelelementen (11 bis 14) besteht, die derart miteinander und mit der Trägerplatte (26) zusammengesteckt sind und an welchen die Trägerplatte (26) derart festgehalten ist, daß sich ein verwindungssteifer Verbund ergibt.

2. Werkstückträger nach Anspruch 1, dadurch gekennzeichnet, daß die Einzelelemente (11 bis 14) des Grundrahmens (10) mit Längsnuten (28) versehen sind, in welche der ebene Rand der Trägerplatte (26) passend eingreift.

3. Werkstückträger nach Anspruch 1 oder 2, dadurch gekennzeichnet, daß jedes Einzelelement (11 bis 14) an einem Ende einen Stirnzapfen (17) und am anderen Ende eine Querbohrung (16) aufweist, deren Abmessungen auf die Größe des Zapfens (17) abgestimmt sind.

4. Werkstückträger nach einem der Ansprüche 1 bis 3, dadurch gekennzeichnet, daß die Trägerplatte (26) mit dem Grundrahmen (10) durch Buchsen (27) verbunden ist, die passend durch Bohrungen (30) in den Einzelelementen (11 bis 14) des Grundrahmens (10) und in der Trägerplatte (26) greifen und gleichzeitig Fixierelemente für den Werkstückträger bilden.

5. Werkstückträger nach einem der vorhergehenden Ansprüche, dadurch gekennzeichnet, daß der Grundrahmen (10) aus gespritzten Kunststoff-Hohlprofilen besteht.

6. Werkstückträger nach Anspruch 5, dadurch gekennzeichnet, daß die Kunststoff-Hohlprofile aus Polyamid mit 10 bis 50 %, vorzugsweise 30 %, Glaskugeln bzw. Glasfasern bestehen.

7. Werkstückträger nach einem der vorhergehenden Ansprüche, dadurch gekennzeichnet, daß die Einzelelemente (11 bis 14) des Grundrahmens (10) Aussparungen (18) als Durchlaß für einen Vereinzelernocken (19) haben.

8. Werkstückträger nach einem der vorhergehenden Ansprüche, dadurch gekennzeichnet, daß die Einzelemente (11 bis 14) des Grundrahmens (10) an ihrer Unterseite mit Nuten (25) zur Justierung des Werkstückträgers im Bereich von Stationen versehen sind.

9. Werkstückträger nach einem der vorhergehenden Ansprüche, dadurch gekennzeichnet, daß der Grundrahmen (10) mit einer äußeren Anschlagfläche (29) für einen benachbarten Werkstückträger und mit einer darunter angeordneten, nach innen versetzten Anschlagfläche (21) zur Bandführung bzw. als Anschlag für einen Vereinzelernocken (19) versehen ist.

10. Werkstückträger nach einem der vorhergehenden Ansprüche, dadurch gekennzeichnet, daß die Trägerplatte (26) selbst als Werkzeugaufnahme (31) ausgebildet ist.

## Claims

1. Workpiece carrier for a production or assembly line, having a carrier plate (26), which is provided with means for supporting the workpieces, characterised in that the carrier plate (26) is held in a basic frame (10) which consists of standardised individual elements (11 to 14), which are so fitted together with one another and with the carrier plate (26) and to which the carrier plate (26) is so fixed that a torsionally rigid assembly is produced.

2. Workpiece carrier according to Claim 1, characterised in that the individual elements (11 to 14) of the basic frame (10) are provided with slots (28), into which the flat edge of the carrier plate (26) engages to fit.

3. Workpiece carrier according to Claim 1 or 2, characterised in that each individual element (11 to 14) has at one end an end journal (17) and at the other end a cross bore (16), the dimensions of which match the size of the journal (17).

4. Workpiece carrier according to one of Claims 1 to 3, characterised in that the carrier plate (26) is connected to the basic frame (10) by means of bushes (27), which protrude through bores (30) in the individual elements (11 to 14) of the basic frame (10) and in the carrier plate (26) and at the same time form fixing elements for the workpiece carrier.

5. Workpiece carrier according to one of the preceding claims, characterised in that the basic frame (10) consists of injected plastic hollow sections.

6. Workpiece carrier according to Claim 5, characterised in that the plastic hollow sections consist of polyamide having 10 to 50 %, preferably 30 %, glass beads or glass fibres.

7. Workpiece carrier according to one of the preceding claims, characterised in that the individual elements (11 to 14) of the basic frame (10) have recesses (18) as passage for a separating cam (19).

8. Workpiece carrier according to one of the preceding claims, characterised in that the individual elements (11 to 14) of the basic frame (10) are provided on their underside with grooves (25) for adjustment of the workpiece carrier in the region of stations.

9. Workpiece carrier according to one of the preceding claims, characterised in that the basic frame (10) is provided with an outer stop surface (29) for a neighbouring workpiece carrier and, arranged below it, a stop surface (21), offset inwards, for belt guidance or as the stop for a separating cam (19).

10. Workpiece carrier according to one of the preceding claims, characterised in that the carrier plate (26) is itself designed as a tool support (31).

## Revendications

1. Dispositif porte-pièce pour des lignes de fabrication et de montage, comportant une plaque de support (26) qui est munie de moyens (31) pour recevoir la pièce, caractérisé en ce que la plaque de support (26) est enserrée dans un cadre de base (10) qui se compose d'éléments distincts (11-14) normalisés, qui sont emmanchés les uns avec les autres et sur la plaque de support (26) et sont maintenus solidairement sur la plaque de support (26) de façon à réaliser un ensemble combiné rigide à la torsion.

2. Dispositif porte-pièce selon la revendication 1, caractérisé en ce que les différents éléments (11-14) du cadre de base (10) comportent des rainures longitudinales (28) dans lesquelles s'adapte par la forme le bord plan de la plaque de support (26).

3. Dispositif porte-pièce selon la revendication 1 ou 2, caractérisé en ce que chaque élément séparé (11-14) comporte à une extrémité un goujon frontal (17) et à l'autre extrémité un perçage transversal (16) dont les dimensions sont adaptées à la dimension du goujon (17).

4. Dispositif porte-pièce selon l'une des revendications 1 à 3, caractérisé en ce que la plaque de support (26) est reliée au cadre de base (10) par des douilles (27) qui traversent de façon adaptée des perçages (30) dans les différents éléments (11-14) du cadre de base (10) et dans la plaque de support (26) en formant en même temps les éléments de fixation du dispositif porte-pièce.

5. Dispositif porte-pièce selon l'une des revendications précédentes, caractérisé en ce que le cadre de base (10) est formé de profilés creux en matière synthétique injectée.

6. Dispositif porte-pièce selon la revendication 5, caractérisé en ce que les profilés creux en matière synthétique sont en polyamide avec 10 à 50 % et de préférence 30 % de billes de verre ou de fibres de verre.

7. Dispositif porte-pièce selon l'une des revendications précédentes, caractérisé en ce que les différents éléments (11-14) du cadre de base (10) ont des cavités (18) comme passages pour les cames de séparation (19).

8. Dispositif porte-pièce selon l'une des revendications précédentes, caractérisé en ce que les différents éléments (11-14) du cadre de base (10) sont munis sur leur face inférieure de rainures (25) pour l'ajustage du dispositif porte-pièce au niveau des postes de fabrication.

9. Dispositif porte-pièce selon l'une des revendications précédentes, caractérisé en ce que le cadre de base (10) est muni d'une surface d'appui extérieure (29) pour un dispositif porte-pièce voisin et d'une surface de butée (21) prévue en dessous, en étant décalée vers l'intérieur pour le guidage des bandes ou comme butée pour une came de séparation (19).

10. Dispositif porte-pièce selon l'une des revendications précédentes, caractérisé en ce que la plaque de support (26) est elle-même réalisée comme moyen de réception de pièce (31).

FIG.1

FIG.2

FIG.3

# FIG.4

# FIG.5

# FIG.6